# EUROPEAN PATENT APPLICATION

(11) **EP 4 429 068 A1**
(43) Date of publication of application: **11.09.2024**
(21) Application number: 24161742.2
(22) Date of filing: 06.03.2024
(51) Int. Cl.: H02J 7/00

(54) **SWITCH CIRCUIT, BMS, SWITCH CONTROL METHOD, BATTERY SYSTEM, AND ELECTRIC DEVICE**

(30) Priority: 06.03.2023 CN 202310206298
(71) Applicant: Xiamen Ampack Technology Limited, Xiamen City, Fujian Province 361000 (CN)
(72) Inventor: LI, Songlin, 361000 Xiamen City, Fujian Province (CN); LIU, Qifan, 361000 Xiamen City, Fujian Province (CN); SU, Zhigao, 361000 Xiamen City, Fujian Province (CN); DU, Xiaojia, 361000 Xiamen City, Fujian Province (CN)
(74) Representative: Icosa

(57) **Abstract**

A switch circuit includes: a power supply; a first switch, where a first terminal of the first switch is electrically connected to the power supply; an isolation driving module, where a second terminal of the first switch is electrically connected to an input terminal of the isolation driving module, and the power supply is configured to supply power to the isolation driving module via the first switch; and a second switch, where a control terminal of the second switch is electrically connected to an output terminal of the isolation driving module, and the second switch is configured to turn on or off in response to an output signal of the isolation driving module. The second switch is configured to be turned on in response to the first switch being triggered under a first condition, the first condition being used to indicate powering on a battery system; and/or the second switch is configured to be turned off in response to the first switch being triggered under a second condition, the second condition being used to indicate powering off the battery system.

## Description

### TECHNICAL FIELD

This application relates to the field of battery technologies, and specifically, to a switch circuit, a battery management system, a switch control method, a battery system, and an electric device.

### BACKGROUND

A battery management system for system management is typically found in electric devices that can be powered by a battery system, such as high-voltage energy storage systems. In the related art, for convenient control, the battery system is typically powered on and off using controls such as a circuit breaker or an electric switch in the high-voltage energy storage system.

### SUMMARY

For safety, circuit breakers or electric switches are typically restricted to manual operation by professional maintenance personnel only, and are not intended for operation by ordinary users, resulting in high maintenance costs and inconvenient control. Therefore, some embodiments of this application provide a switch circuit, a battery management system, a switch control method, a battery system, and an electric device, where the switch circuit is arranged on the battery management system, so as to alleviate the foregoing problems.

An embodiment of this application provides a switch circuit, including: a power supply; a first switch, where a first terminal of the first switch is electrically connected to the power supply; an isolation driving module, where a second terminal of the first switch is electrically connected to an input terminal of the isolation driving module, and the power supply is configured to supply power to the isolation driving module via the first switch; and a second switch, where a control terminal of the second switch is electrically connected to an output terminal of the isolation driving module, and the second switch is configured to turn on or off in response to an output signal of the isolation driving module; where in response to the first switch being triggered under a first condition, the second switch is turned on, the first condition being used to indicate powering on a battery system; and/or in response to the first switch being triggered under a second condition, the second switch is turned off, the second condition being used to indicate powering off the battery system.

Based on the switch circuit, the turn-on and turn-off control of the second switch can be implemented by controlling the first switch, so as to power on and off the battery system. Due to the isolation provided by the isolation driving module between the first switch and the second switch, when the switch circuit is applied to a high-voltage electric device, only the second switch needs to be connected to a battery with a high voltage. This reduces the influence of the high voltage from the battery on the first switch, allowing the first switch to be a conventional switch device (for example, a tact switch). As a result, the first switch can be operated by ordinary users, in contrast to circuit breakers or electric switches, leading to reduced maintenance costs and improved control convenience.

Further, the switch circuit further includes a first unidirectional conducting apparatus; where a first terminal of the first unidirectional conducting apparatus is electrically connected to the second terminal of the first switch, and a second terminal of the first unidirectional conducting apparatus is electrically connected to the input terminal of the isolation driving module.

The provision of the first unidirectional conducting apparatus can effectively prevent reverse current flow between the first switch and the isolation driving module, improving safety of the switch circuit.

Further, the second switch further includes a first terminal and a second terminal, where the first terminal of the second switch is configured to be electrically connected to an input terminal of a power module, and the second terminal of the second switch is configured to be electrically connected to a positive electrode of a battery.

The first terminal of the second switch is configured to be electrically connected to the input terminal of the power module, and the second terminal of the second switch is configured to be electrically connected to the positive electrode of the battery, such that when the second switch is turned on, the power module can convert a voltage output by the battery to a power supply voltage of the switch circuit, thereby providing electrical energy for subsequently continuous turn-on of the second switch.

Further, the switch circuit further includes a first voltage conversion apparatus, where an input terminal of the first voltage conversion apparatus is configured to be electrically connected to an output terminal of the power module, and an output terminal of the first voltage conversion apparatus is electrically connected to the input terminal of the isolation driving module; where the first voltage conversion apparatus is configured to step down an output voltage of the power module.

The first voltage conversion apparatus can convert the voltage output by the power module to the voltage accepted by the isolation driving module, so as to continue to drive the second switch to turn on after the first switch is turned off, thereby maintaining the battery system in the power-on state.

Further, the switch circuit further includes a voltage stabilizing device, where the voltage stabilizing device is electrically connected between the output terminal of the first voltage conversion apparatus and the input terminal of the isolation driving module.

The provision of the voltage stabilizing device can maintain stable voltage input to the isolation driving module, thereby reducing the risk of unintentional turn-off of the second switch due to voltage fluctuations.

Further, the switch circuit further includes a first latch, where an input terminal of the first latch is configured to be electrically connected to a microcontroller unit, and an output terminal of the first latch is electrically connected to an enable pin of the voltage stabilizing device.

The provision of the first latch can continuously enable the voltage stabilizing device to operate, thereby maintaining the battery system in the power-on state. After the first switch is triggered under the second condition, the microcontroller unit can control the first latch to stop outputting the enable signal, such that the voltage stabilizing device stops operating, and in turn the first voltage conversion apparatus stops supplying power to the isolation driving module, thereby implementing the turn-off control of the second switch.

In addition, powering off through circuit breakers or electric switches constitutes a forced power-off. During power-off, a battery management system is forcefully powered off, which leads to the inability to store data running in the battery management system in a timely manner, thereby losing the running data. In this embodiment of this application, because the turn-off of the second switch is controlled by the microcontroller unit, the microcontroller unit can save data in advance before the turn-off, reducing the risk of data loss.

Further, the switch circuit further includes a second unidirectional conducting apparatus, where a first terminal of the second unidirectional conducting apparatus is electrically connected to an output terminal of the voltage stabilizing device, and a second terminal of the second unidirectional conducting apparatus is electrically connected to the input terminal of the isolation driving module.

The provision of the second unidirectional conducting apparatus can effectively prevent reverse current flow between the voltage stabilizing device and the isolation driving module, improving the safety of the switch circuit.

Further, the switch circuit further includes a second voltage conversion apparatus, where an input terminal of the second voltage conversion apparatus is configured to be electrically connected to the output terminal of the power module, and an output terminal of the second voltage conversion apparatus is electrically connected to the input terminal of the isolation driving module; where the second voltage conversion apparatus is configured to step down the output voltage of the power module.

The second voltage conversion apparatus is provided, the input terminal of the second voltage conversion apparatus is configured to be electrically connected to the output terminal of the power module, and the output terminal of the second voltage conversion apparatus is electrically connected to the input terminal of the isolation driving module, thereby forming a redundant circuit for supplying power to the isolation driving module. In this way, in the case of failure in any one of the power supply circuits for supplying power to the isolation driving module, the other power supply circuit can still operate normally, thereby improving reliability of the switch circuit.

Further, the switch circuit further includes a third switch, where a first terminal of the third switch is configured to be electrically connected to the output terminal of the power module, and a second terminal of the third switch is electrically connected to the input terminal of the second voltage conversion apparatus.

The third switch can control whether the redundant circuit is turned on or off, thereby making the switch circuit more controllable.

Further, the switch circuit further includes a second latch, where an input terminal of the second latch is configured to be electrically connected to a microcontroller unit, and an output terminal of the second latch is electrically connected to an enable pin of the third switch.

The provision of the second latch can continuously enable the third switch to turn on, thereby maintaining the battery system in the power-on state. After the first switch is triggered under the second condition, the microcontroller unit can control the second latch to stop outputting the enable signal, such that the third switch is turned off, and in turn the second voltage conversion apparatus stops supplying power to the isolation driving module. In addition, in this embodiment of this application, because the turn-off of the second switch is controlled by the microcontroller unit, the microcontroller unit can save data in advance before the turn-off, reducing the risk of data loss.

Further, the switch circuit further includes a third unidirectional conducting apparatus, where a first terminal of the third unidirectional conducting apparatus is electrically connected to the output terminal of the second voltage conversion apparatus, and a second terminal of the third unidirectional conducting apparatus is electrically connected to the input terminal of the isolation driving module.

Based on the foregoing implementation structure, the provision of the third unidirectional conducting apparatus can effectively prevent reverse current flow between the second voltage conversion apparatus and the isolation driving module, improving the safety of the switch circuit.

Further, the switch circuit further includes: a power input terminal configured to be electrically connected to an external power supply; a third voltage conversion apparatus, where an input terminal of the third voltage conversion apparatus is electrically connected to the power input terminal; and a first isolated power supply, where an input terminal of the first isolated power supply is electrically connected to an output terminal of the third voltage conversion apparatus, and an output terminal of the first isolated power supply is electrically connected to the input terminal of the isolation driving module.

The external power supply can be connected via the power input terminal and the third voltage conversion apparatus to implement the turn-on control of the second switch. In addition, the first isolated power supply isolates the external power supply from the electronic components in the switch circuit, reducing the risk of burning the switch circuit due to the connection of an incompatible external power supply.

Further, the switch circuit further includes a fourth unidirectional conducting apparatus, where a first terminal of the fourth unidirectional conducting apparatus is electrically connected to the output terminal of the first isolated power supply, and a second terminal of the fourth unidirectional conducting apparatus is electrically connected to the input terminal of the isolation driving module.

The provision of the fourth unidirectional conducting apparatus can effectively prevent reverse current flow between the first isolated power supply and the isolation driving module, improving the safety of the switch circuit.

Further, the switch circuit further includes a charging module, where an input terminal of the charging module is configured to be electrically connected to an output terminal of the power module, and an output terminal of the charging module is electrically connected to the power supply.

The charging module provided can charge the power supply after the second switch is turned on, so that the first switch can subsequently continue to control the turn-on of the second switch.

Further, the switch circuit further includes a current limiting resistor, where the current limiting resistor is configured to be connected in series between the battery and the power module.

The provision of the current limiting resistor can reduce the probability of burning the components due to excessive current generated after the battery is connected to the power module, improving the safety of the switch circuit.

Further, the switch circuit further includes a fuse arranged on a charging path and/or discharging path of the battery system.

The fuse being arranged on the charging path and/or discharging path of the battery system can reduce the risk of burning the battery system, improving safety of the battery system.

Further, the power supply includes a supercapacitor and/or a button cell.

Further, the first switch is a tact switch, and the second switch is any one of an FET (Field Effect Transistor, field effect transistor), an IGBT (Insulated Gate Bipolar Transistor, insulated gate bipolar transistor), a relay, an optocoupler, or a triode.

With the tact switch used as the first switch, the user can easily perform the turn-on and turn-off operations of the first switch, improving user operation convenience. With any one of the FET, the IGBT, the relay, the optocoupler, or the triode used as the second switch, the second switch can be turned on and off based on the output of the isolation driving module. This results in a structurally simple and cost-effective implementation, conducive to promotion in industrial applications.

Further, the isolation driving module includes a second isolated power supply and an isolation driving chip; where the input terminal of the isolation driving module includes an input terminal of the second isolated power supply and an input terminal of the isolation driving chip, and the output terminal of the isolation driving module includes an output terminal of the isolation driving chip; where an output terminal of the second isolated power supply is electrically connected to a power supply terminal of the isolation driving chip.

Due to the circuit isolation function of both the second isolated power supply and the isolation driving chip, the electronic components located at the input terminal of the isolation driving module in the switch circuit can be isolated from the battery, so that even if the switch circuit in this embodiment of this application is applied to scenarios with a high voltage such as a high-voltage energy storage system, the risk of damage to the electronic components located at the input terminal of the isolation driving module can be reduced, improving the safety of the switch circuit. In addition, the second isolated power supply provided can supply power to the isolation driving chip, so that the isolation driving chip can operate normally.

Further, a ground terminal of the second isolated power supply and a ground terminal of the isolation driving chip are both electrically connected to the first terminal of the second switch.

An embodiment of this application further provides a BMS (Battery Management System, battery management system), including any one of the foregoing switch circuits.

In a feasible implementation, the battery management system further includes a microcontroller unit, the switch circuit being the foregoing switch circuit with the first latch or the second latch; where a power pin of the microcontroller unit is electrically connected to the output terminal of the first voltage conversion apparatus; and the microcontroller unit is further electrically connected to the input terminal of the first latch, and/or the microcontroller unit is further electrically connected to the input terminal of the second latch.

The microcontroller unit can control the first latch and/or the second latch, so as to control the continuous turn-on and turn-off of the second switch. In addition, in this embodiment of this application, because the turn-off of the second switch is controlled by the microcontroller unit, the microcontroller unit can save data in advance before the turn-off, reducing the risk of data loss.

An embodiment of this application provides a switch control method, applied to any one of the foregoing battery management systems, where the method includes: in response to the first switch being triggered under the first condition, supplying, by the power supply, power to the isolation driving module; where the second switch is turned on in response to the output signal of the isolation driving module.

Further, the battery management system is the battery management system in the foregoing feasible implementation; where the method further includes: in response to the second switch being turned on, outputting, by the microcontroller unit, a first control signal to the first latch; where the first control signal is used to indicate the first latch to output an enable signal to the voltage stabilizing device, so that the first voltage conversion apparatus supplies power to the isolation driving module via the voltage stabilizing device.

The microcontroller unit, by controlling the first latch, can continuously enable the voltage stabilizing device to operate, thereby maintaining the battery system in the power-on state, which is simple and reliable in control manner, conducive to promotion and use in industrial applications.

Further, the switch control method further includes: in response to the second switch being turned on, outputting, by the microcontroller unit, a second control signal to the second latch; where the second control signal is used to indicate the second latch to output an enable signal to the third switch to turn on the third switch, so that the second voltage conversion apparatus supplies power to the isolation driving module.

Continuously enabling the third switch to turn on maintains the battery system in the power-on state, which is simple and reliable in control manner, conducive to promotion and use in industrial applications. In addition, because the turn-off of the second switch is controlled by the microcontroller unit, the microcontroller unit can save data in advance before the turn-off, reducing the risk of data loss.

Further, the switch control method further includes: in response to the first switch being triggered under the second condition, outputting, by the microcontroller unit, a third control signal to the first latch; where the third control signal is used to indicate the first latch to stop outputting an enable signal to the voltage stabilizing device.

The microcontroller unit, by outputting the third control signal to the first latch, can control the first latch to stop enabling the voltage stabilizing device to operate, such that the first voltage conversion apparatus stops supplying power to the isolation driving module, which is simple and reliable in control manner, conducive to promotion and use in industrial applications.

Further, the switch control method further includes: in response to the first switch being triggered under the second condition, outputting, by the microcontroller unit, a fourth control signal to the second latch; where the fourth control signal is used to indicate the second latch to stop outputting an enable signal to the third switch to turn off the third switch.

The microcontroller unit, by outputting the fourth control signal to the second latch, can control the second latch to stop enabling the third switch to turn on, such that the second voltage conversion apparatus stops supplying power to the isolation driving module, which is simple and reliable in control manner, conducive to promotion and use in industrial applications. In addition, because the turn-off of the second switch is controlled by the microcontroller unit, the microcontroller unit can save data in advance before the turn-off, reducing the risk of data loss.

An embodiment of this application further provides a battery system, including a battery, a power module, and any one of the foregoing battery management systems; the battery being electrically connected to the power module via the second switch; where in response to the second switch being turned on, the battery supplies power to the battery management system via the power module.

An embodiment of this application further provides an electric device, including a load and the foregoing battery system; where the battery system supplies power to the load.

### BRIEF DESCRIPTION OF DRAWINGS

To describe the technical solutions of some embodiments of this application more clearly, the following briefly describes the accompanying drawings required for describing some embodiments of this application. It is appreciated that the accompanying drawings below show merely some embodiments of this application and thus should not be considered as limitations on the scope.
FIG. 1 is a schematic diagram of a basic structure of a switch circuit according to an embodiment of this application;
FIG. 2 is a schematic diagram of a more specific structure of a switch circuit according to an embodiment of this application;
FIG. 3 is a schematic diagram of another more specific structure of a switch circuit according to an embodiment of this application;
FIG. 4 is a schematic diagram of a connection structure of a switch circuit, a battery, and a power module according to an embodiment of this application;
FIG. 5 is a schematic structural diagram of a switch circuit with a voltage stabilizing device according to an embodiment of this application based on FIG. 4;
FIG. 6 is a schematic structural diagram of a switch circuit with a first latch according to an embodiment of this application based on FIG. 5;
FIG. 7 is a schematic structural diagram of a switch circuit with a redundant circuit according to an embodiment of this application;
FIG. 8 is a schematic structural diagram of a switch circuit with a third switch according to an embodiment of this application based on FIG. 7;
FIG. 9 is a schematic structural diagram of a switch circuit with a second latch according to an embodiment of this application based on FIG. 8;
FIG. 10 is a schematic structural diagram of a switch circuit capable of being powered on by an external power supply according to an embodiment of this application;
FIG. 11 is a schematic structural diagram of a switch circuit with a charging module according to an embodiment of this application;
FIG. 12 is a schematic structural diagram of a switch circuit with a current limiting resistor according to an embodiment of this application;
FIG. 13 is a schematic structural diagram of a switch circuit with a fuse according to an embodiment of this application;
FIG. 14 is a schematic flowchart of a switch control method according to an embodiment of this application; and
FIG. 15 is a schematic diagram of a specific structure of a battery system according to an embodiment of this application.

### DESCRIPTION OF EMBODIMENTS

The following describes in detail some embodiments of technical solutions of this application with reference to the accompanying drawings. Apparently, the described embodiments are merely some but not all of the embodiments of this application. The following embodiments can be used as examples for a clearer description of the technical solutions of this application and do not constitute any limitations on the protection scope of this application. Persons skilled in the art can understand that in absence of conflicts, the following embodiments and features in the embodiments can be combined with each other.

In the descriptions of some embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects. "A plurality of" means more than two, unless otherwise specifically defined.

In the descriptions of some embodiments of this application, unless otherwise specified and defined explicitly, the technical term "electrical connection" may refer to a direct electrical connection or an indirect electrical connection via an intermediate medium. Persons of ordinary skill in the art can understand specific meanings of these terms in some embodiments of this application as appropriate to specific situations.

Currently, a battery system is typically subjected to power-on and power-off management using controls such as a circuit breaker or an electric switch. However, circuit breakers or electric switches require manual operation by professional maintenance personnel, and are not intended for operation by ordinary users to prevent accidents, resulting in high maintenance costs and inconvenient control. In addition, powering off through circuit breakers or electric switches constitutes a forced power-off. During power-off, a battery management system in the battery system is forcefully powered off, which leads to the inability to store data running in the battery management system in a timely manner, thereby losing the running data.

Therefore, some embodiments of this application propose a switch circuit, a battery management system, a switch control method, a battery system, and an electric device to alleviate at least some of the foregoing problems. Specifically, in the switch circuit proposed in some embodiments of this application, a power supply is conductively connected to an isolation driving module via a first switch, the power supply supplies power to the isolation driving module such that the isolation driving module is in an operating state, and the isolation driving module outputs a voltage for controlling a second switch to turn on to implement turn-on control of the second switch, so that the battery system can be powered on and off by controlling the first switch. Due to the isolation provided by the isolation driving module between the first switch and the second switch, the influence of battery voltage on the first switch is reduced in a case that the second switch is connected to a battery, allowing the first switch to be a conventional switch device (for example, a tact switch). As a result, the first switch can be operated by ordinary users, in contrast to circuit breakers or electric switches, leading to reduced maintenance costs and improved control convenience. In some embodiments of this application, a microcontroller unit can also be used to implement turn-off control of the second switch, thereby alleviating the problem of loss of running data caused by inability to store data running in the battery management system in a timely manner during power-off.

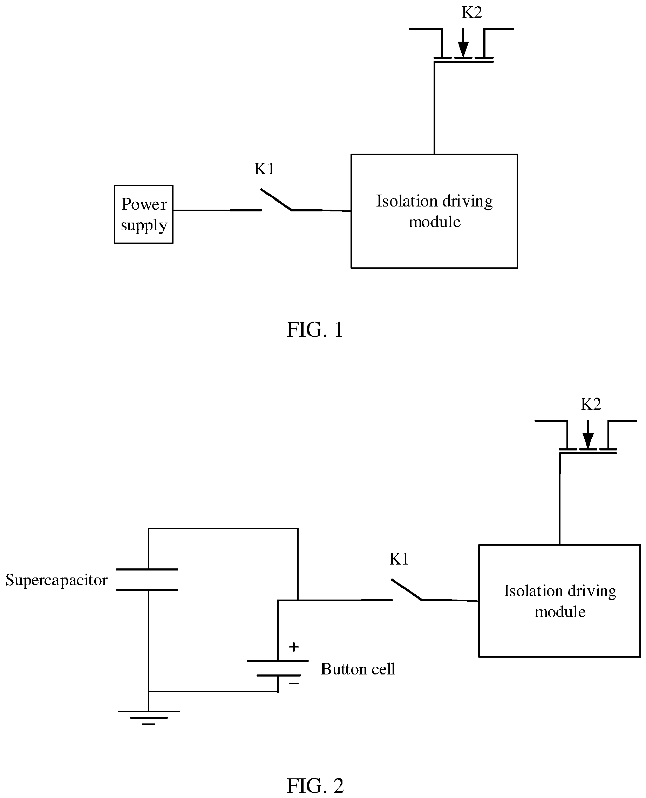

Referring to FIG. 1, FIG. 1 is a schematic diagram of a basic structure of a switch circuit according to an embodiment of this application, including a power supply, a first switch K1, an isolation driving module, and a second switch K2.

In some embodiments of this application, the power supply is a device that is disposed inside the switch circuit and can provide electrical energy, and may include but is not limited to one or more of devices such as a supercapacitor and a button cell. In these embodiments of this application, the power supply may be provided in one or plurality. In the case of a plurality of power supplies, types of the power supplies may be the same or different, and the power supplies may be connected in parallel between a first terminal of the first switch K1 and ground. For example, as shown in FIG. 2, the power supply includes a supercapacitor and a button cell that are connected in parallel.

Still referring to FIG. 1, a first terminal of the first switch K1 is electrically connected to the power supply, and a second terminal of the first switch K1 is electrically connected to an input terminal of the isolation driving module. When the first switch K1 is turned on, the power supply can supply power to the isolation driving module.

In these embodiments of this application, the first switch K1 may take the form of a button, and when the first switch K1 is pressed, the first switch K1 can be turned on. The first switch K1 may also have the characteristic that after the external force of pressing is released, the first switch K1 springs back and returns to the off state. For example, the first switch K1 may be but is not limited to a tact switch (also referred to as a button switch) for convenient user operation.

In these embodiments of this application, a control terminal of the second switch K2 is electrically connected to an output terminal of the isolation driving module, and the second switch K2 is configured to turn on or off in response to an output signal of the isolation driving module.

In these embodiments of this application, the second switch K2 may be but is not limited to any one of an FET, an IGBT, a relay, an optocoupler, or a triode. The FET may be but is not limited to a MOSFET (Metal-Oxide-Semiconductor Field-Effect Transistor, metal-oxide-semiconductor field-effect transistor), a photoelectric MOS, or a gallium nitride FET.

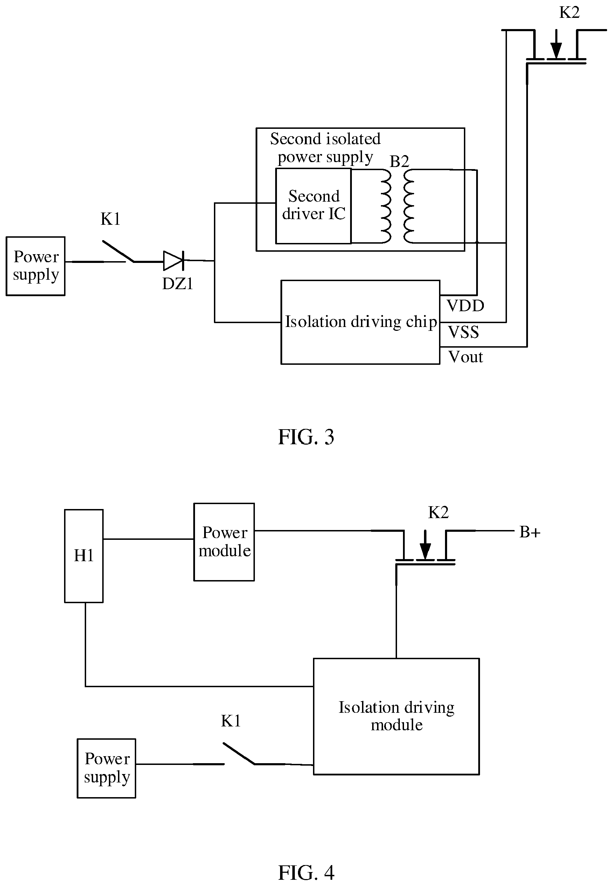

In these embodiments of this application, as shown in FIG. 3, the isolation driving module may include a second isolated power supply and an isolation driving chip. An input terminal of the second isolated power supply and an input terminal of the isolation driving chip jointly form the input terminal of the isolation driving module, and each are electrically connected to the second terminal of the first switch K1. An output terminal of the second isolated power supply is electrically connected to a power supply terminal VDD of the isolation driving chip to provide a voltage that can drive the isolation driving chip to operate. An output terminal Vout of the isolation driving chip is used as the output terminal of the entire isolation driving module and is electrically connected to the control terminal of the second switch K2 to implement turn-on and turn-off control of the second switch K2.

In these embodiments of this application, a ground terminal of the second isolated power supply and a ground terminal VSS of the isolation driving chip may be both electrically connected to a first terminal of the second switch K2.

In these embodiments of this application, the second isolated power supply may include a second driver IC (a circuit or chip for providing driving) and a second transformer B2. The second driver IC is electrically connected to a primary side of the second transformer B2 to provide a driving voltage greater than a voltage threshold for the second transformer B2. The voltage threshold can be set based on circuit requirements, for example, may be 3.3 volts or 5 volts. An output terminal of a secondary side of the second transformer B2 is electrically connected to the power supply terminal VDD of the isolation driving chip to provide a voltage that can drive the isolation driving chip to operate. A ground terminal of the secondary side of the second transformer B2 is electrically connected to the first terminal of the second switch K2.

In these embodiments of this application, the isolation driving chip (also referred to as an isolation chip or an isolation driver) refers to a chip with isolation capability and driving capability, and can be obtained by combining a digital isolator with a driving chip.

In these embodiments of this application, in response to the first switch K1 being triggered to turn on under a first condition, the second switch K2 is turned on, the first condition being used to indicate powering on a battery system; and/or in response to the first switch K1 being triggered under a second condition, the second switch K2 is turned off, the second condition being used to indicate powering off the battery system.

In these embodiments of this application, the first condition can be used to indicate that the first switch K1 is turned on, so that the battery system is powered on. The first condition may be but is not limited to pressing the first switch K1 to trigger the first switch K1 to turn on, or pressing the first switch K1 and holding for a first duration to trigger the first switch K1 to turn on. The first duration may be greater than or equal to a duration for the second switch K2 to be turned on. For example, the first duration is set to 3 to 5 seconds.

In these embodiments of this application, the second condition can be used to indicate that the first switch K1 is turned off, so that the battery system is powered off. The second condition may be but is not limited to first pressing the first switch K1 and then releasing the external force, causing the first switch K1 to spring back to the off state, or pressing the first switch K1 and holding for a second duration and then releasing the external force, causing the first switch K1 to spring back to the off state, to trigger the first switch to turn off. The second duration may be set as required. For example, the second duration is set to 2 seconds. In some other embodiments of this application, the second condition may alternatively be pressing the first switch K1 and holding for a second duration, where the first duration and the second duration are set to different durations.

In this way, the turn-on and turn-off control of the second switch K2 is implemented by controlling the first switch K1, so as to power on and off the battery system. In addition, due to the isolation provided by the isolation driving module between the first switch K1 and the second switch K2, when the switch circuit is applied to a high-voltage energy storage system, only the second switch K2 needs to be connected to a battery with a high voltage. This reduces the influence of the battery voltage on the first switch K1, allowing the first switch K1 to be a conventional switch device (for example, a tact switch). As a result, the first switch K1 can be operated by ordinary users, in contrast to circuit breakers or electric switches, leading to reduced maintenance costs and improved control convenience.

Optionally, as shown in FIG. 3, the switch circuit may further include a first unidirectional conducting apparatus DZ1. A first terminal of the first unidirectional conducting apparatus DZ1 is electrically connected to the second terminal of the first switch K1, and a second terminal of the first unidirectional conducting apparatus DZ1 is electrically connected to the input terminal of the isolation driving module, thereby reducing the risk of reverse current flow between the first switch K1 and the isolation driving module. Optionally, the first unidirectional conducting apparatus DZ1 may be but is not limited to a diode.

In these embodiments of this application, as shown in FIG. 4, a first terminal of the second switch K2 may be configured to be electrically connected to an input terminal of a power module, and a second terminal of the second switch K2 may be configured to be electrically connected to a positive electrode of a battery. In this way, when the second switch K2 is turned on, the power module can convert a voltage output by the battery to a power supply voltage of the switch circuit, thereby providing electrical energy for subsequently continuous turn-on of the second switch K2.

It can be understood that the power module refers to a device that can convert an alternating current or direct current to a required alternating current or direct current. In some specific implementations of this application, the power module may be an independent device, the switch circuit may be arranged on a printed circuit board independent of the power module, and the power module is electrically connected to the printed circuit board via electrical connection apparatuses (a wire harness, a connector, a busbar, and the like).

Optionally, in some implementations of these embodiments of this application, the second switch K2 may be provided in plurality (not shown in the figure), and the plurality of second switches K2 may be configured to be connected in parallel between the positive electrode B+ of the battery and the power module. For example, the first terminal of each second switch K2 is configured to be electrically connected to the input terminal of the power module, the second terminal of each second switch K2 is configured to be electrically connected to the positive electrode B+ of the battery, and the control terminal of each second switch K2 is electrically connected to the output terminal of the isolation driving module. In this way, connecting the plurality of second switches K2 in parallel can share current on a main loop of the battery system, thereby reducing the risk of damage to the second switch K2.

In these embodiments of this application, as shown in FIG. 4, the switch circuit may further include a first voltage conversion apparatus H1. An input terminal of the first voltage conversion apparatus H1 is configured to be electrically connected to an output terminal of the power module, and an output terminal of the first voltage conversion apparatus H1 is electrically connected to the input terminal of the isolation driving module. The first voltage conversion apparatus H1 is configured to step down an output voltage of the power module. It can be understood that the first voltage conversion apparatus H1 may be but is not limited to a buck circuit.

The first voltage conversion apparatus H1 can convert the voltage output by the power module to the voltage accepted by the isolation driving module, so as to continue to drive the second switch K2 to turn on after the first switch K1 is turned off, thereby maintaining the battery system in the power-on state.

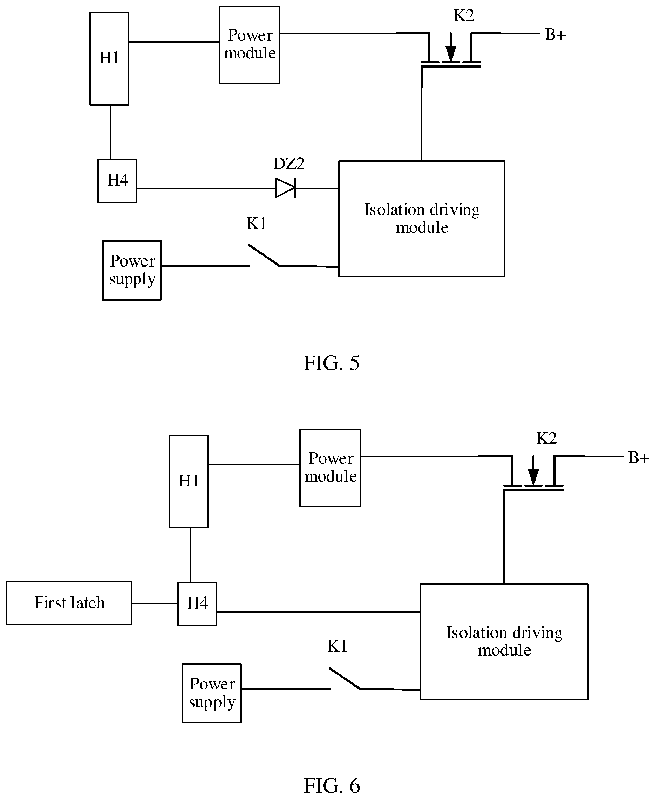

In some optional embodiments of this application, as shown in FIG. 5, the switch circuit may further include a voltage stabilizing device H4. The voltage stabilizing device H4 is electrically connected between the output terminal of the first voltage conversion apparatus H1 and the input terminal of the isolation driving module. Optionally, the voltage stabilizing device H4 may be but is not limited to a linear regulator, for example, an LDO (Low Dropout Regulator, low dropout regulator), so as to maintain stable voltage input to the isolation driving module, thereby reducing the risk of unintentional turn-off of the second switch K2 due to voltage fluctuations. It can be understood that the voltage stabilizing device H4 may alternatively be configured as a device or circuit that further converts the voltage output by the first voltage conversion apparatus H1, so as to output a stable (with small voltage fluctuations) voltage that meets the requirements of the isolation driving module.

Optionally, as shown in FIG. 5, the switch circuit may further include a second unidirectional conducting apparatus DZ2. A first terminal of the second unidirectional conducting apparatus DZ2 is electrically connected to an output terminal of the voltage stabilizing device H4, and a second terminal of the second unidirectional conducting apparatus DZ2 is electrically connected to the input terminal of the isolation driving module, thereby reducing the risk of reverse current flow between the voltage stabilizing device H4 and the isolation driving module. Optionally, the second unidirectional conducting apparatus DZ2 may be but is not limited to a diode.

In some optional embodiments of this application, as shown in FIG. 6, the switch circuit may further include a first latch. An input terminal of the first latch is configured to be electrically connected to a microcontroller unit, and an output terminal of the first latch is electrically connected to an enable pin of the voltage stabilizing device H4.

It can be understood that in some embodiments of this application, the microcontroller unit may be part of the BMS, and may be but is not limited to an MCU (Microcontroller Unit), a single-chip microcomputer, or a microprocessor.

In these embodiments of this application, the provision of the first latch can continuously enable the voltage stabilizing device H4 to operate, thereby maintaining the battery system in the power-on state. After the first switch K1 is triggered under the second condition, the microcontroller unit can control the first latch to stop outputting the enable signal, such that the voltage stabilizing device H4 stops operating, and in turn the first voltage conversion apparatus H1 stops supplying power to the isolation driving module, thereby implementing the turn-off control of the second switch K2. Because the turn-off of the second switch K2 is controlled by the microcontroller unit, the microcontroller unit can save data in advance before the turn-off, reducing the risk of data loss.

In some other embodiments of this application, an output terminal of the first switch K1 may also be configured to be electrically connected to the microcontroller unit. The microcontroller unit is in the power-on state, and after receiving the signal indicating that the first switch K1 is triggered to turn off under the second condition, the microcontroller can control the first latch to stop outputting the enable signal.

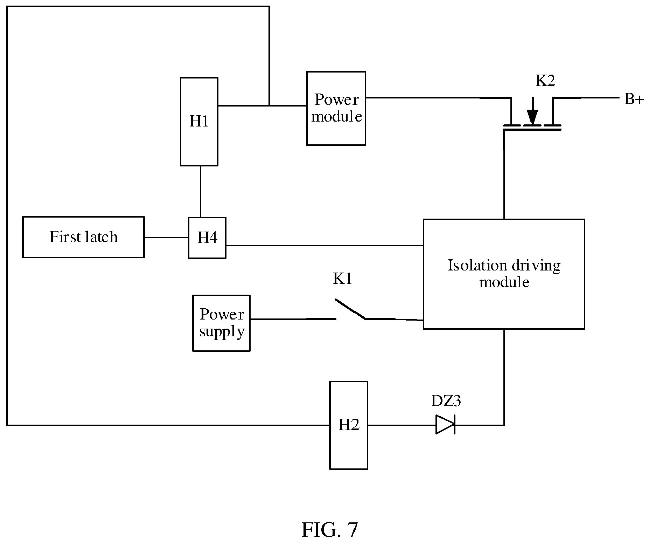

In some optional embodiments of this application, as shown in FIG. 7, the switch circuit may further include a second voltage conversion apparatus H2 in addition to the first voltage conversion apparatus H1. An input terminal of the second voltage conversion apparatus H2 is configured to be electrically connected to the output terminal of the power module, and an output terminal of the second voltage conversion apparatus H2 is electrically connected to the input terminal of the isolation driving module. The second voltage conversion apparatus H2 is configured to step down the output voltage of the power module. It can be understood that the second voltage conversion apparatus H2 may also be but is not limited to a buck circuit.

The second voltage conversion apparatus H2 is provided, the input terminal of the second voltage conversion apparatus H2 is configured to be electrically connected to the output terminal of the power module, and the output terminal of the second voltage conversion apparatus H2 is electrically connected to the input terminal of the isolation driving module, thereby forming another redundant circuit for supplying power to the isolation driving module. In this way, in the case of failure in any one of the power supply circuits for supplying power to the isolation driving module, the other power supply circuit can still operate normally, thereby improving reliability of the switch circuit.

Optionally, as shown in FIG. 7, the switch circuit may further include a third unidirectional conducting apparatus DZ3. A first terminal of the third unidirectional conducting apparatus DZ3 is electrically connected to the output terminal of the second voltage conversion apparatus H2, and a second terminal of the third unidirectional conducting apparatus DZ3 is electrically connected to the input terminal of the isolation driving module, thereby reducing the risk of reverse current flow between the second voltage conversion apparatus H2 and the isolation driving module. Optionally, the third unidirectional conducting apparatus DZ3 may be but is not limited to a diode.

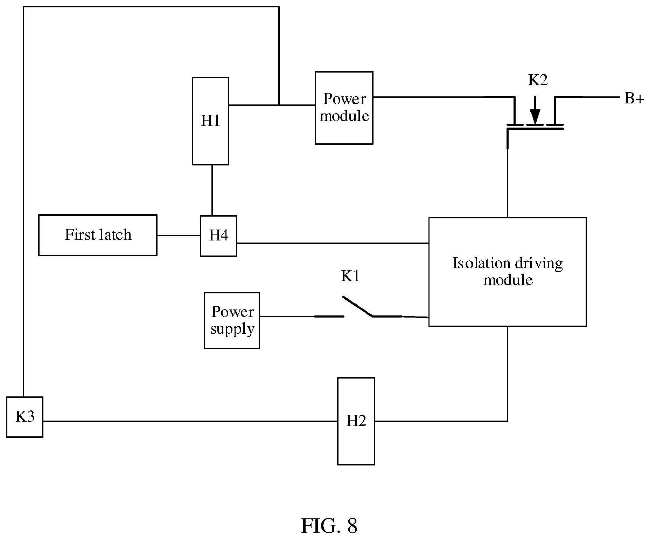

In some optional embodiments of this application, as shown in FIG. 8, the switch circuit may further include a third switch K3. A first terminal of the third switch K3 is configured to be electrically connected to the output terminal of the power module, and a second terminal of the third switch K3 is electrically connected to the input terminal of the second voltage conversion apparatus H2. The third switch K3 can control whether the redundant power supply circuit is turned on or off, thereby making the switch circuit more controllable.

Optionally, in these embodiments of this application, the third switch K3 may be but is not limited to an eFuse (one-time programmable memory). For example, the third switch K3 may alternatively be an FET, an IGBT, an optocoupler, or the like.

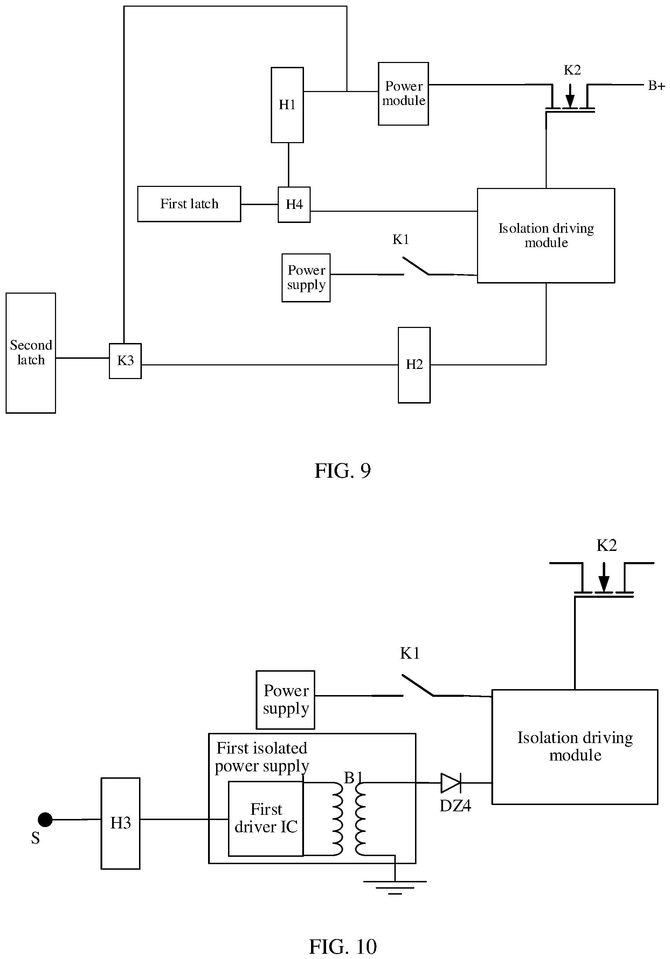

In some optional embodiments of this application, as shown in FIG. 9, the switch circuit may further include a second latch. An input terminal of the second latch is configured to be electrically connected to a microcontroller unit, and an output terminal of the second latch is electrically connected to an enable pin of the third switch K3. The provision of the second latch can continuously enable the third switch K3 to turn on, thereby maintaining the battery system in the power-on state. After the first switch K1 is triggered under the second condition, the microcontroller unit can control the second latch to stop outputting the enable signal, such that the third switch K3 is turned off, and in turn the second voltage conversion apparatus H2 stops supplying power to the isolation driving module. In these embodiments of this application, because the turn-off of the second switch K2 is controlled by the microcontroller unit, the microcontroller unit can save data in advance before the turn-off, reducing the risk of data loss.

In some other embodiments of this application, an output terminal of the first switch K1 may also be configured to be electrically connected to the microcontroller unit. The microcontroller unit is in the power-on state, and after receiving the signal indicating that the first switch K1 is triggered to turn off under the second condition, the microcontroller can control the second latch to stop outputting the enable signal.

In some optional embodiments of this application, as shown in FIG. 10, the switch circuit may further include a power input terminal S, a third voltage conversion apparatus H3, and a first isolated power supply. The power input terminal S is configured to be electrically connected to an external power supply. An input terminal of the third voltage conversion apparatus H3 is electrically connected to the power input terminal S. An input terminal of the first isolated power supply is electrically connected to an output terminal of the third voltage conversion apparatus H3, and an output terminal of the first isolated power supply is electrically connected to the input terminal of the isolation driving module.

Through the foregoing circuit, the second switch K2 can be turned on by connecting the external power supply. In addition, the first isolated power supply can isolate the external power supply from the electronic components in the switch circuit, reducing the risk of burning the switch circuit due to the connection of an incompatible external power supply.

It can be understood that the first isolated power supply and the second isolated power supply have similar implementation structures. The first isolated power supply may include a first driver IC (a circuit or chip for providing driving) and a first transformer B 1. The first driver IC is electrically connected to a primary side of the first transformer B 1 to provide a driving voltage greater than a voltage threshold for the first transformer B 1. The voltage threshold may be but is not limited to 3.3 volts or 5 volts. An output terminal of a secondary side of the first transformer B 1 is electrically connected to the input terminal of the isolation driving module to output a voltage that meets the requirements of the isolation driving module for the isolation driving module.

It can also be understood that the external power supply refers to a power supply located outside the switch circuit relative to the switch circuit.

Optionally, as shown in FIG. 10, the switch circuit may further include a fourth unidirectional conducting apparatus DZ4. A first terminal of the fourth unidirectional conducting apparatus DZ4 is electrically connected to the output terminal of the first isolated power supply, and a second terminal of the fourth unidirectional conducting apparatus DZ4 is electrically connected to the input terminal of the isolation driving module, thereby reducing the risk of reverse current flow between the first isolated power supply and the isolation driving module. Optionally, the fourth unidirectional conducting apparatus DZ4 may be but is not limited to a diode.

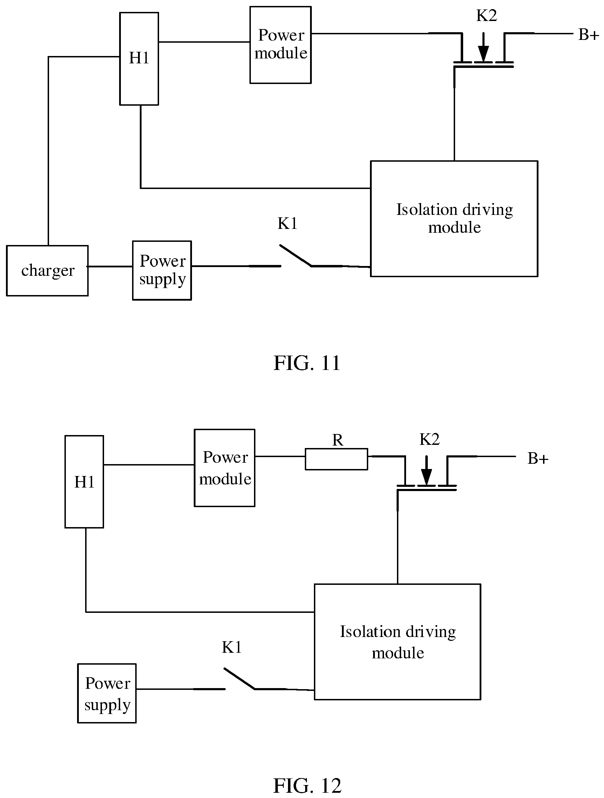

In some optional embodiments of this application, as shown in FIG. 11, the switch circuit may further include a charging module charger. An input terminal of the charging module charger is configured to be electrically connected to an output terminal of the power module, and an output terminal of the charging module charger is electrically connected to the power supply. The charging module charger provided can charge the power supply after the second switch K2 is turned on, so that the first switch K1 can subsequently continue to control the turn-on of the second switch K2.

In an example implementation, a specific manner in which the input terminal of the charging module charger is configured to be electrically connected to the output terminal of the power module may be: the input terminal of the charging module charger is electrically connected to the output terminal of at least one of the first voltage conversion apparatus H1, the second voltage conversion apparatus H2, and the third voltage conversion apparatus H3, such that the charging module charger is electrically connected to the output terminal of the power module via at least one of the first voltage conversion apparatus H1, the second voltage conversion apparatus H2, and the third voltage conversion apparatus H3, thereby obtaining a voltage that meets the charging requirements of the power supply.

In another example implementation, a specific manner in which the input terminal of the charging module charger is configured to be electrically connected to the output terminal of the power module may alternatively be: the input terminal of the charging module charger is electrically connected to an output terminal of a fourth voltage conversion apparatus, such that the charging module charger is electrically connected to the output terminal of the power module via the fourth voltage conversion apparatus, thereby obtaining a voltage that meets the charging requirements of the power supply. The fourth voltage conversion apparatus is a voltage conversion apparatus independent of the first voltage conversion apparatus H1, the second voltage conversion apparatus H2, and the third voltage conversion apparatus H3.

In some optional embodiments of this application, as shown in FIG. 12, the switch circuit may further include a current limiting resistor R. The current limiting resistor R is configured to be connected in series between the battery and the power module. The provision of the current limiting resistor R can reduce the probability of burning the electronic components (for example, burning the second switch K2) due to excessive current generated after the battery is connected to the power module, improving safety of the switch circuit.

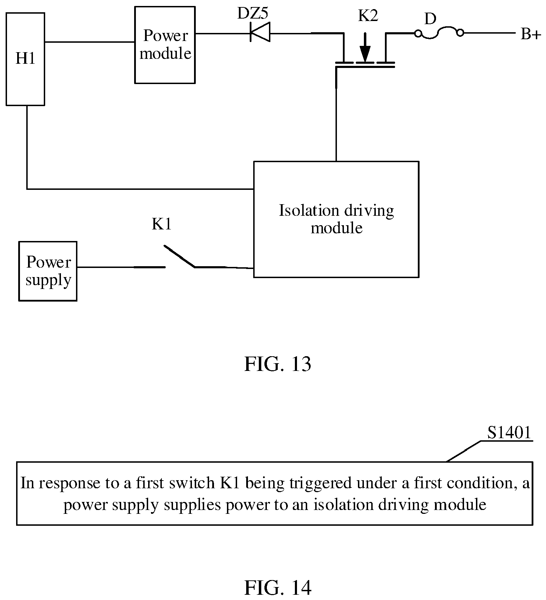

In some optional embodiments of this application, the switch circuit may further include a fuse D. The fuse D is arranged on a charging path and/or discharging path of the battery system, so as to reduce the risk of burning the battery system, improving safety of the battery system. For example, as shown in FIG. 13, the fuse D may be arranged between the positive electrode of the battery and the second switch K2.

Optionally, as shown in FIG. 13, the switch circuit may further include a fifth unidirectional conducting apparatus DZ5. A first terminal of the fifth unidirectional conducting apparatus DZ5 is electrically connected to the first terminal of the second switch K2, and a second terminal of the fifth unidirectional conducting apparatus DZ5 is electrically connected to the input terminal of the power module, thereby reducing the risk of reverse current flow between the second switch K2 and the power module. Optionally, the fifth unidirectional conducting apparatus DZ5 may be but is not limited to a diode.

Based on the same inventive concept, an embodiment of this application further provides a BMS, including the switch circuit provided in some embodiments of this application.

It can be understood that the BMS may have a microcontroller unit. When the switch circuit includes the first voltage conversion apparatus and the first latch and/or the second latch, a power pin of the microcontroller unit may be electrically connected to the output terminal of the first voltage conversion apparatus H1. The microcontroller unit may further be electrically connected to the input terminal of the first latch, and/or the microcontroller unit may further be electrically connected to the input terminal of the second latch.

Based on the same inventive concept, an embodiment of this application further provides a switch control method, applied to the foregoing BMS. Referring to FIG. 14, the method includes the following step.

S1401: In response to the first switch K1 being triggered under the first condition, the power supply supplies power to the isolation driving module. The second switch K2 is turned on in response to the output signal of the isolation driving module.

In this embodiment of this application, in a case that the power pin of the microcontroller unit is electrically connected to the output terminal of the first voltage conversion apparatus H1 and the microcontroller unit is also electrically connected to the input terminal of the first latch, the switch control method may further include:
in response to the second switch K2 being turned on, outputting, by the microcontroller unit, a first control signal to the first latch; where the first control signal is used to indicate the first latch to output an enable signal to the voltage stabilizing device H4, so that the first voltage conversion apparatus H1 supplies power to the isolation driving module via the voltage stabilizing device H4.

It can be understood that the microcontroller unit itself typically has no power supply, so the microcontroller unit is in a power-off state when the second switch K2 is not turned on. After the second switch K2 is turned on, the battery can supply power to the microcontroller unit via the power module, such that the microcontroller unit is powered on, and in turn the microcontroller unit outputs the first control signal to the first latch.

Because data in the latch can remain unchanged, after the microcontroller unit outputs the first control signal to the first latch, the first latch can continuously output the enable signal to the voltage stabilizing device H4, such that the first voltage conversion apparatus H1 continuously supplies power to the isolation driving module via the voltage stabilizing device H4, so as to maintain the turn-on of the second switch K2 after the first switch K1 is turned off.

In this embodiment of this application, the microcontroller unit is further electrically connected to the output terminal of the first switch K1. When the microcontroller unit is in the power-on state, the signal indicating that the first switch K1 is triggered to turn off under the second condition is monitored, such that the microcontroller unit can output a third control signal to the first latch, where the third control signal is used to indicate the first latch to stop outputting an enable signal to the voltage stabilizing device H4.

It can be understood that when there is no second latch in the switch circuit, after the microcontroller unit outputs the third control signal to the first latch, the voltage stabilizing device H4 stops operating, such that the isolation driving module has no input voltage and stops outputting a signal for controlling the turn-on of the second switch K2 to the control terminal of the second switch K2, so as to turn off the second switch K2.

In a case that the microcontroller unit is electrically connected to the input terminal of the second latch, the switch control method may further include: in response to the second switch K2 being turned on, outputting, by the microcontroller unit, a second control signal to the second latch; where the second control signal is used to indicate the second latch to output an enable signal to the third switch K3 to turn on the third switch K3, so that the second voltage conversion apparatus H2 supplies power to the isolation driving module.

Because data in the latch can remain unchanged, after the microcontroller unit outputs the second control signal to the second latch, the second latch can continuously output the enable signal to the third switch K3, such that the second voltage conversion apparatus H2 can continuously supply power to the isolation driving module, so as to maintain the turn-on of the second switch K2 after the first switch K1 is turned off.

In addition, in a case that the microcontroller unit is electrically connected to the input terminal of the second latch, the switch control method may further include: in response to the first switch K1 being triggered to turn off under the second condition, outputting, by the microcontroller unit, a fourth control signal to the second latch. The fourth control signal is used to indicate the second latch to stop outputting an enable signal to the enable signal to turn off the third switch K3.

It can be understood that after the microcontroller unit controls the voltage stabilizing device H4 to stop operating and turns off the third switch K3, the isolation driving module no longer receives input voltage and stops outputting a signal for controlling the turn-on of the second switch K2 to the control terminal of the second switch K2, so as to turn off the second switch K2.

It can be understood that the BMS may have more components. For example, the BMS may further include a data acquisition chip (for example, an AFE (Analog Front End, analog front end) chip) for acquiring battery information (voltage, temperature, and the like).

Based on the same inventive concept, an embodiment of this application further provides a battery system, including a battery, a power module, and the foregoing BMS. The battery may be electrically connected to the power module via the second switch K2. In response to the second switch K2 being turned on, the battery supplies power to the battery management system via the power module.

It can be understood that the battery in this embodiment of this application may consist of a plurality of battery cells, and the plurality of battery cells may be connected in series, parallel, or series-parallel, where being connected in series-parallel means that the plurality of battery cells are connected in both series and parallel. It can be understood that the battery may alternatively be formed by a plurality of battery cells being connected in series, parallel, or series-parallel first to form a battery pack and then a plurality of battery packs being connected in series, parallel, or series-parallel to form an entirety. The battery may further include other structures, for example, a busbar configured to implement electrical connection between the plurality of battery cells. In this embodiment of this application, the battery cell may be a secondary battery, including a lithium-ion battery, a sodium-ion battery, a magnesium-ion battery, or a solid-state battery, without being limited thereto. In this embodiment of this application, the battery cell may be a cell or a battery entity containing a cell, which is not limited herein.

In this embodiment of this application, the battery system may be but is not limited to a high-voltage energy storage system, a vehicle power supply system, or a battery pack. The high-voltage energy storage system refers to a system with a battery output voltage greater than 60 V.

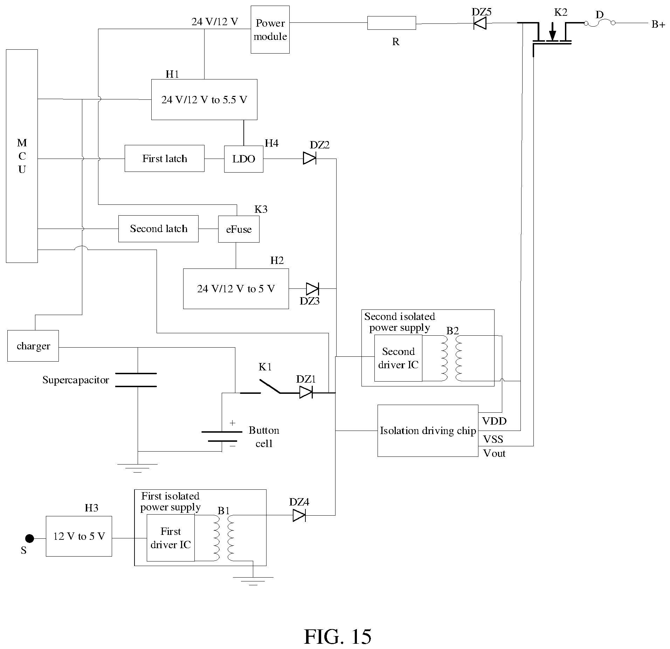

For ease of understanding of the solution in this embodiment of this application, the following uses a circuit shown in FIG. 15 as an example to describe the solution in this embodiment of this application. The power supply is a supercapacitor and a button cell that are connected in parallel, the power module is a 24 V/12 V DC/DC (direct current-direct current) power module, the first switch K1 is a tact switch, the second switch K2 is an NMOS field-effect transistor, the first voltage conversion apparatus H1 is a voltage conversion circuit converting 24 V/12 V to 5.5 V, the second voltage conversion apparatus H2 is a voltage conversion circuit converting 24 V/12 V to 5 V, the voltage stabilizing device H4 is an LDO, the third switch K3 is an eFuse, the third voltage conversion apparatus H3 is a voltage conversion circuit converting 12 V to 5 V, and the first unidirectional conducting apparatus DZ1 to the fifth unidirectional conducting apparatus DZ5 are diodes. For the circuit structure, reference may be made to FIG. 15. The first switch K1 has the characteristic that after the external force of pressing is released, the first switch K1 springs back and returns to the off state. The first switch K1 may be disposed on an external panel of the battery system for convenient user operation.

For powering on the battery system, the user presses the first switch K1 and holds for a specified duration (for example, 3 to 5 seconds). At that point, the supercapacitor and the button cell output a voltage to the isolation driving module, and the output terminal of the isolation driving module outputs the voltage to a gate of the second switch K2, so as to turn on the second switch K2. The battery supplies power to the power module via the fuse D, the second switch K2, and the current limiting resistor R. After the power module converts the battery voltage to a low voltage of 24 V or 12 V, the first conversion apparatus further steps down the voltage to 5.5 V and outputs the voltage to the MCU to wake up the MCU, or the voltage conversion circuit or apparatus further steps down the voltage of 5.5 V to 5 V or 3.3 V and outputs the voltage to the MCU to wake up the MCU (not shown in the figure), and the first conversion apparatus outputs the voltage of 5.5 V to the LDO. The MCU outputs the first control signal to the first latch, such that the first latch continuously outputs the enable signal to the LDO to enable the LDO to operate, thereby continuously supplying power to the isolation driving module, such that the isolation driving module can still continuously supply power to the gate of the second switch K2 even after the first switch K1 is turned off due to release of the external force, maintaining continuous turn-on of the second switch K2. In addition, the MCU outputs the second control signal to the second latch to enable the eFuse to continuously transmit the voltage output by the power module to the second conversion apparatus, and in turn the second conversion apparatus steps down the voltage to 5 V and outputs the voltage to the isolation driving module, such that the isolation driving module can still continuously supply power to the gate of the second switch K2 even after the first switch K1 is turned off due to release of the external force, maintaining continuous turn-on of the second switch K2. Meanwhile, the voltage output by the power module also charges the supercapacitor and the button cell via the charging module charger.

Moreover, the user may alternatively connect the power input terminal S to the external power supply, so as to power on the battery system via the external power supply. After the power input terminal S is connected to the external power supply, the third voltage conversion apparatus H3 converts the voltage of the external power supply to the voltage of 5 V, and outputs the voltage to the isolation driving module via the first isolated power supply. At that point, the output terminal of the isolation driving module outputs the voltage to the gate of the second switch K2, so as to turn on the second switch K2. The battery supplies power to the power module via the fuse D, the second switch K2, and the current limiting resistor R. After the power module converts the battery voltage to a low voltage of 24 V or 12 V, the first conversion apparatus further steps down the voltage to 5.5 V and outputs the voltage to the MCU to wake up the MCU, or the voltage conversion circuit or apparatus further steps down the voltage of 5.5 V to 5 V or 3.3 V and outputs the voltage to the MCU to wake up the MCU (not shown in the figure), and the first conversion apparatus outputs the voltage of 5.5 V to the LDO. The MCU outputs the first control signal to the first latch, such that the first latch continuously outputs the enable signal to the LDO to enable the LDO to operate, thereby continuously supplying power to the isolation driving module, such that the isolation driving module can still continuously supply power to the gate of the second switch K2 even after the first switch K1 is turned off due to release of the external force, maintaining continuous turn-on of the second switch K2. In addition, the MCU outputs the second control signal to the second latch to enable the eFuse to continuously transmit the voltage output by the power module to the second conversion apparatus, and in turn the second conversion apparatus steps down the voltage to 5 V and outputs the voltage to the isolation driving module, such that the isolation driving module can still continuously supply power to the gate of the second switch K2 even after the first switch K1 is turned off due to release of the external force, maintaining continuous turn-on of the second switch K2. Meanwhile, the voltage output by the power module also charges the supercapacitor and the button cell via the charging module charger.

For powering off the battery system, the user presses the first switch K1 and holds for a specified duration (for example, 3 seconds). At that point, after the MCU detects the voltage signal output from the output terminal of the first switch K1 for a specified duration, the MCU outputs the third control signal to the first latch to enable the first latch to stop outputting the enable signal to the LDO. Subsequently, the LDO stops operating, and the first voltage conversion apparatus H1 stops supplying power to the isolation driving module. In addition, the MCU outputs the fourth control signal to the second latch to enable the second latch to stop outputting the enable signal to the eFuse. Subsequently, the eFuse stops transmitting the voltage output by the power module to the second conversion apparatus H2, and the isolation driving module can no longer obtain electrical energy. Moreover, the first switch K1 is turned off due to release of the external force. In a case that the first voltage conversion apparatus H1 stops supplying power to the isolation driving module, the second conversion apparatus H2 stops supplying power to the isolation driving module, and the first switch K1 is turned off, the isolation driving module has no source of electrical energy and stops supplying power to the gate of the second switch K2, such that the second switch K2 is turned off, and the battery system is powered off.

The foregoing solution in which after the external force of pressing is released, the first switch K1 automatically springs back to be turned off is merely an example of this embodiment of this application. In addition, different operations for turning off the first switch K1 can be set based on specific requirements.

Through the solution provided in this embodiment of this application, the user can control the power-on and power-off of the battery system by operating the first switch K1, with low operation requirements, leading to reduced maintenance costs and improved control convenience. In addition, because the battery system is powered off through the microcontroller unit, the microcontroller unit can save the running data before the battery system is powered off, thereby reducing the risk of data loss.

It can be understood that in this embodiment of this application, various electronic components in the switch circuit that are electrically connected to the input terminal of the isolation driving module, such as the first switch, the first voltage conversion apparatus, the second voltage conversion apparatus, the third voltage conversion apparatus, the voltage stabilizing device, the first latch, the second latch, the power supply, the charging module, and the third switch, may be arranged on one or more circuit boards, while the isolation driving module, the second switch, the fuse D, and the current limiting resistor R may be arranged on another one or more circuit boards, so as to implement isolation on the circuit boards, further improving the safety of the battery system.

Based on the same inventive concept, an embodiment of this application further provides an electric device, including a load and the battery system provided in some embodiments of this application; where the battery system supplies power to the load.

The electric device provided in this embodiment of this application may be but is not limited to an electric train, an electric vehicle, a ship, an electric two-wheeler (for example, an electric scooter or an electric bicycle), an electric motorcycle, or an electric tricycle.

The described embodiments are merely illustrative and are merely embodiments of this application, which are not intended to limit the protection scope of this application. Persons skilled in the art understand that this application may have various modifications and variations. Any modifications, equivalent replacements, and improvements made without departing from the spirit and principle of this application shall fall within the protection scope of this application.

## Claims

1. A switch circuit, **characterized in that** the switch circuit comprises:
a power supply;
a first switch, a first terminal of the first switch is electrically connected to the power supply;
an isolation driving module, a second terminal of the first switch is electrically connected to an input terminal of the isolation driving module, and the power supply is configured to supply power to the isolation driving module via the first switch; and
a second switch, a control terminal of the second switch is electrically connected to an output terminal of the isolation driving module, and the second switch is configured to turn on or off in response to an output signal of the isolation driving module; wherein
the second switch is configured to be turned on in response to the first switch being triggered under a first condition, the first condition being used to indicate powering on a battery system; and/or, the second switch is configured to be turned off in response to the first switch being triggered under a second condition, the second condition being used to indicate powering off the battery system.

2. The switch circuit according to claim 1, further comprising a first unidirectional conducting apparatus; **characterized in that**
a first terminal of the first unidirectional conducting apparatus is electrically connected to the second terminal of the first switch, and a second terminal of the first unidirectional conducting apparatus is electrically connected to the input terminal of the isolation driving module;
a first terminal of the second switch is configured to be electrically connected to an input terminal of a power module, and a second terminal of the second switch is configured to be electrically connected to a positive electrode of a battery.

3. The switch circuit according to claim 1 or 2, further comprising a first voltage conversion apparatus; **characterized in that**
an input terminal of the first voltage conversion apparatus is configured to be electrically connected to an output terminal of the power module, and an output terminal of the first voltage conversion apparatus is electrically connected to the input terminal of the isolation driving module;
the first voltage conversion apparatus is configured to step down an output voltage of the power module.

4. The switch circuit according to claim 3, further comprising a voltage stabilizing device and a first latch; **characterized in that**
the voltage stabilizing device is electrically connected between the output terminal of the first voltage conversion apparatus and the input terminal of the isolation driving module;
an input terminal of the first latch is configured to be electrically connected to a microcontroller unit, and an output terminal of the first latch is electrically connected to an enable pin of the voltage stabilizing device.

5. The switch circuit according to claim 4, further comprising a second unidirectional conducting apparatus; **characterized in that**
a first terminal of the second unidirectional conducting apparatus is electrically connected to an output terminal of the voltage stabilizing device, and a second terminal of the second unidirectional conducting apparatus is electrically connected to the input terminal of the isolation driving module.

6. The switch circuit according to claim 4 or 5, further comprising a second voltage conversion apparatus;
an input terminal of the second voltage conversion apparatus is configured to be electrically connected to the output terminal of the power module, and an output terminal of the second voltage conversion apparatus is electrically connected to the input terminal of the isolation driving module; **characterized in that**
the second voltage conversion apparatus is configured to step down the output voltage of the power module.

7. The switch circuit according to claim 6, further comprising a third switch and a second latch; **characterized in that**
a first terminal of the third switch is configured to be electrically connected to the output terminal of the power module, and a second terminal of the third switch is electrically connected to the input terminal of the second voltage conversion apparatus;
an input terminal of the second latch is configured to be electrically connected to the microcontroller unit, and an output terminal of the second latch is electrically connected to an enable pin of the third switch.

8. The switch circuit according to claim 6 or 7, further comprising a third unidirectional conducting apparatus; **characterized in that**
a first terminal of the third unidirectional conducting apparatus is electrically connected to the output terminal of the second voltage conversion apparatus, and a second terminal of the third unidirectional conducting apparatus is electrically connected to the input terminal of the isolation driving module.

9. The switch circuit according to any one of claims 1 to 8, **characterized in that** the switch circuit further comprises:
a power input terminal configured to be electrically connected to an external power supply;
a third voltage conversion apparatus, an input terminal of the third voltage conversion apparatus is electrically connected to the power input terminal;
a first isolated power supply, an input terminal of the first isolated power supply is electrically connected to an output terminal of the third voltage conversion apparatus, and an output terminal of the first isolated power supply is electrically connected to the input terminal of the isolation driving module.

10. The switch circuit according to claim 9, further comprising a fourth unidirectional conducting apparatus; **characterized in that**
a first terminal of the fourth unidirectional conducting apparatus is electrically connected to the output terminal of the first isolated power supply, and a second terminal of the fourth unidirectional conducting apparatus is electrically connected to the input terminal of the isolation driving module.

11. The switch circuit according to any one of claims 3 to 8, further comprising a charging module; **characterized in that**
an input terminal of the charging module is electrically connected to the output terminal of the first voltage conversion apparatus, and an output terminal of the charging module is electrically connected to the power supply.

12. The switch circuit according to any one of claims 1 to 11, further comprising a current limiting resistor and a fuse; **characterized in that**
the current limiting resistor and the fuse is configured to be connected in series between the battery and the power module.

13. The switch circuit according to any one of claims 1 to 12, **characterized in that** the power supply comprises a supercapacitor and/or a button cell;
the first switch is a tact switch, and the second switch is any one of a field effect transistor, an insulated gate bipolar transistor, a relay, an optocoupler, or a triode.

14. The switch circuit according to any one of claims 2 to 13, **characterized in that** the isolation driving module comprises a second isolated power supply and an isolation driving chip;
the input terminal of the isolation driving module comprises an input terminal of the second isolated power supply and an input terminal of the isolation driving chip, and the output terminal of the isolation driving module comprises an output terminal of the isolation driving chip;
an output terminal of the second isolated power supply is electrically connected to a power supply terminal of the isolation driving chip;
a ground terminal of the second isolated power supply and a ground terminal of the isolation driving chip are both electrically connected to the first terminal of the second switch.

15. A battery management system, **characterized in that** the battery management system comprises a microcontroller unit and the switch circuit according to any one of claims 1 to 14.

16. The battery management system according to claim 15, **characterized in that** the switch circuit comprises:
a first voltage conversion apparatus, a power pin of the microcontroller unit is electrically connected to a output terminal of the first voltage conversion apparatus;
a voltage stabilizing device and a first latch, the microcontroller unit is electrically connected to an input terminal of the first latch, an output terminal of the first latch is electrically connected to an enable pin of the voltage stabilizing device;
and/or
a third switch and a second latch, an input the microcontroller unit is electrically connected to the input terminal of the second latch, an output terminal of the second latch is electrically connected to an enable pin of the third switch;
a second voltage conversion apparatus, a second terminal of the third switch is electrically connected to the input terminal of the second voltage conversion apparatus.

17. A switch control method, applied to the battery management system according to claim 16, **characterized in that** the method comprises:
in response to the first switch being triggered under the first condition, the power supply supplies power to the isolation driving module, in response to the output signal of the isolation driving module, the second switch is turned on;
in response to the second switch being turned on, the microcontroller unit outputs a first control signal to the first latch, in response the first control signal, the first latch outputs an enable signal to the voltage stabilizing device, so that the first voltage conversion apparatus supplies power to the isolation driving module via the voltage stabilizing device;
and/or,
in response to the second switch being turned on, the microcontroller unit outputs a second control signal to the second latch, in response the second control signal, the second latch outputs an enable signal to the third fuse to turn on the third switch, so that the second voltage conversion apparatus supplies power to the isolation driving module.

18. The switch control method according to claim 17, **characterized in that** the method comprises:
in response to the first switch being triggered under the second condition, the microcontroller unit outputs a third control signal to the first latch, in response to the third control signal, the first latch stops outputting an enable signal to the voltage stabilizing device, the stabilizing device stops operating;
and/or,
in response to the first switch being triggered under the second condition, the microcontroller unit outputs a fourth control signal to the second latch, in response to the fourth control signal, the second latch stops outputting an enable signal to the third switch to turn off the third switch.

19. A battery system, **characterized in that** the battery system comprises a battery, a power module, and the battery management system according to claim 16;
the battery is electrically connected to the power module via the second switch, the battery supplies power to the battery management system via the power module and the first voltage conversion apparatus;
a first terminal of the third switch is electrically connected to the power module.
